(19) Europäisches Patentamt / European Patent Office / Office européen des brevets

(11) **EP 3 092 904 B1**

(12) **EUROPEAN PATENT SPECIFICATION**

(45) Date of publication and mention
of the grant of the patent:
**08.01.2020 Bulletin 2020/02**

(21) Application number: **15734814.5**

(22) Date of filing: **08.01.2015**

(51) Int Cl.:
***A23D 9/00*** *(2006.01)*

(86) International application number:
**PCT/KR2015/000207**

(87) International publication number:
**WO 2015/105359 (16.07.2015 Gazette 2015/28)**

(54) **SESAME OIL AND METHOD FOR PREPARING SAME**

SESAMÖL UND VERFAHREN ZUR HERSTELLUNG DAVON

HUILE DE SÉSAME ET SON PROCÉDÉ DE PRÉPARATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.01.2014 KR 20140002390**

(43) Date of publication of application:
**16.11.2016 Bulletin 2016/46**

(73) Proprietor: **CJ Cheiljedang Corporation
Seoul 100-400 (KR)**

(72) Inventors:
• **SEO, Jang Won**
**Seoul 150-103 (KR)**
• **LEE, Kyu Eun**
**Chuncheon-si
Gangwon-do 200-938 (KR)**
• **KIM, Chul Jin**
**Seoul 152-774 (KR)**
• **JUNG, Dong Chul**
**Incheon 406-751 (KR)**
• **MOON, Jun Hee**
**Seoul 152-720 (KR)**
• **LEE, Yoon Hee**
**Seongnam-si
Gyeonggi-do 463-779 (KR)**
• **LEE, Jae Hwan**
**Eumseong-gun
Chungcheongbuk-do 369-854 (KR)**

(74) Representative: **Cabinet Beau de Loménie
158, rue de l'Université
75340 Paris Cedex 07 (FR)**

(56) References cited:
EP-A2- 0 771 531        JP-A- 2000 210 018
JP-A- 2001 335 793      KR-A- 20070 002 911
KR-B1- 100 522 206      US-A1- 2004 220 432

• HIROMI YOSHIDA ET AL: "Variations in the composition of various acyl lipids, tocopherols and lignans in sesame seed oils roasted in a microwave oven", JOURNAL OF THE SCIENCE OF FOOD AND AGRICULTURE, vol. 68, no. 4, 1 August 1995 (1995-08-01) , pages 407-415, XP055394681, GB ISSN: 0022-5142, DOI: 10.1002/jsfa.2740680403
• GOW-CHIN YEN: "Influence of seed roasting process on the changes in composition and quality of sesame (Sesame indicum) oil", JOURNAL OF THE SCIENCE OF FOOD AND AGRICULTURE, vol. 50, no. 4, 1 January 1990 (1990-01-01), pages 563-570, XP055394683, GB ISSN: 0022-5142, DOI: 10.1002/jsfa.2740500413
• DATABASE WPI Week 200503 Thomson Scientific, London, GB; AN 2005-028158 XP002772682, -& KR 2004 0074188 A (U-MAX CO LTD) 23 August 2004 (2004-08-23)
• DATABASE WPI Week 201348 Thomson Scientific, London, GB; AN 2013-J37786 XP002775121, -& KR 2013 0047271 A (BIOTECHNOLOGY CO LTD) 8 May 2013 (2013-05-08)
• DATABASE WPI Week 200650 Thomson Scientific, London, GB; AN 2006-486647 XP002775122, -& KR 100 522 206 B1 (THAREX CO LTD) 18 October 2005 (2005-10-18)

**Description**

[Technical Field]

The present invention relates to sesame oil and a method of preparing the same.

[Background Art]

Lignans, which are an important component of sesame seeds or sesame oil, have antioxidative activity in vitro/in vivo and also provide hypotensive effects, reduction of blood lipid levels, reduction of lipid peroxidation level, and alcoholytic activity.

As a typical method of preparing sesame oil, squeezing oil from whole sesame seeds or sesame flour having been subjected to appropriate roasting treatment; and extraction using supercritical carbon dioxide are known in the art.

Although a squeezing method is generally used, this method requires high temperature during extraction in order to increase a yield rate, possibly causing changes in sensory properties or generation of harmful substances such as benzopyrene. Conversely, extraction using a supercritical fluid is a technique of using several advantages of a fluid in a supercritical state. In other words, such a supercritical fluid can satisfy both dissolving capability of liquid and penetration depth of gas and thus improves extraction efficiency due to good penetration into a sample; allows high extraction rate due to high diffusion coefficient; allows extraction at a relatively low temperature, thereby preventing heat-loss of nutrients; facilitates separation of a residual extract from a solvent due to large difference in density between a sample and the supercritical fluid and low viscosity of the supercritical fluid.

In extraction using supercritical carbon dioxide, a high content of a desired material can be extracted by varying pressure and temperature conditions using supercritical properties.

In this regard, there is known a supercritical extraction method aimed at increasing the content of sesamol, which is one of lignans in sesame oil (Korean Patent No. 10-0481648). However, this method includes roasting and extraction at high temperature, causing increase in risk of harmful substances and thus deterioration in quality of sesame oil.

Further, in supercritical extraction, water is used as a cosolvent in order to overcome the problem of reduction in extraction efficiency during decompression. However, when water is used, a final extract contains water causing deterioration in quality of sesame oil while requiring a standing process for several days or a centrifugal process to remove water from the extract.

Generally, the amount of free fatty acids in sesame seeds increases when a raw material is stored under poor conditions or for a long time and may vary depending on crop conditions in a sesame producing area or the variety of sesame seeds. It is desirable not to use a raw material having high acid value due to poor storage conditions. However, even when a raw material without any problems is used, a raw material having low acid value must be at least partly used in consideration of the fact that, in preparation of sesame oil, free fatty acids are also concentrated during concentration of lignans. Since a raw material having low acid value is highly priced and is often in limited supply, use of such a raw material can reduce raw-material competitiveness.

Further, although a fraction having high lignan content is obtained through supercritical fractionation, due to high free fatty acid content of the fraction, a fraction obtained in a fractionation section in which lignans are to be concentrated at a low level needs to be mixed therewith, thereby making it impossible to produce sesame oil having a high lignan content.

EP0771531A2 discloses a sesame oil having a lignan content of 13,281 ppm (1 ppm=1 mg/kg) and a tocopherol content of 335 ppm.

Hiromi Yoshida et al. (Journal of the Science of Food and Agriculture, vol. 68, no. 4, 1 August 1995, pages 407-415) discloses a sesame oil (Brown, unroasted) having a lignan content of 11,163.1 ppm and a tocopherol content of 531.5 ppm.

Gow-Chin Yen (Journal of the Science of Food and Agriculture, vol. 50, no. 4, 1 January 1990, pages 563-570) discloses a sesame oil (unroasted) having a lignan content of 12,948 ppm and another sesame oil (roasted at 200 °C) having a tocopherol content of 480.7 ppm.

Therefore, there is a need for a method of preparing sesame oil, capable of preparing sesame oil which has a high concentration of useful components and thus can meet quality standards, using sesame extracts obtained by supercritical extraction without causing reduction in extraction efficiency.

[Disclosure]

[Technical Problem]

It is one aspect of the present invention to provide a method of preparing sesame oil which can prepare sesame oil having high lignan and tocopherol contents and a low free fatty acid content while improving extraction efficiency without causing reduction in oil quality, and sesame oil prepared by the same.

It is another aspect of the present invention to provide a method of preparing sesame oil which can more efficiently prepare sesame oil with high lignan and tocopherol contents by obtaining fractions according to a flow rate of a supercritical fluid in supercritical fluid extraction without an additional process such as removal of water or changes in process conditions, and sesame oil prepared by the same.

It is a further aspect of the present invention to provide a method of preparing sesame oil which can more efficiently prepare sesame oil high lignan and tocopherol contents by obtaining fractions according to a flow rate of a supercritical fluid in supercritical fluid extraction and performing deacidification with magnesium silicate, magnesium oxide, or sodium hydroxide, and sesame oil prepared by the same.

[Technical Solution]

In accordance with one aspect of the present invention, there is provided sesame oil having a high lignan content, which has a lignan content of 14,000 ppm to 16,000 ppm and a tocopherol content of 600 ppm to 700 ppm.

It is also disclosed a sesame oil having high lignan and low free fatty acid contents, which has a lignan content of 7,800 ppm or more and a free fatty acid content of 1.0 wt% to 3.0 wt%.

In accordance with a further aspect of the present invention, there is provided a method of preparing sesame oil according to the invention, including: extracting using a supercritical fluid to provide sesame extract, wherein extraction of the sesame extract is performed at an S/F ratio of more than 0, and 30 or less; separating the supercritical fluid from a mixture of the supercritical fluid and the sesame extract; and obtaining an early fraction by primary fractionation of the separated sesame extract at an S/F ratio of more than 0, and 10 or less.

The method of and the invention may further comprise a step of removing free fatty acids by adding at least one free fatty acid removal agent selected from among magnesium silicate, magnesium oxide, and sodium hydroxide to the obtained sesame extract.

In accordance with yet another aspect of the present invention, there is provided sesame oil obtained by the method of the invention.

It is also disclosed fats and oils including the sesame oil having high lignan and tocopherol contents as set forth above.

It is also disclosed a fats and oils including the sesame oil having high lignan and low free fatty acid contents as set forth above.

The invention is specifically disclosed in the claims.

[Advantageous Effects]

According to the present invention, it is possible to provide a method of preparing sesame oil, which can prepare sesame oil having a high lignan content using a difference between solubility of materials in a supercritical fluid in extraction, thereby improving extraction efficiency and quality of sesame oil, and sesame oil prepared by the same.

Specifically, it is possible to provide a method of preparing sesame oil, which prepares a plurality of sesame oil fractions depending on desired properties, such that the amount of free fatty acids can be adjusted to a proper level to reduce acid value in an extraction process through adjustment of the point of time at which each fraction is extracted or the amount ratio of the fractions, thereby allowing preparation of sesame oil meeting food standards and having improved flavor, and sesame oil prepared by the same.

In addition, it is possible to provide a method of preparing sesame oil, which prepares a plurality of sesame oil fractions depending on desired properties, such that the amount of lignan and tocopherol can be increased and the amount of free fatty acids can be adjusted to a proper level to reduce acid value in an extraction process through adjustment of the point of time at which each fraction is extracted or the amount ratio of the fractions and in a deacidification process using magnesium silicate, magnesium oxide, or sodium hydroxide, thereby allowing preparation of sesame oil meeting food standards and having improved flavor, and sesame oil prepared by the same.

[Description of Drawings]

Fig. 1 is a schematic view of a method of preparing sesame oil having a high lignan content according to one embodiment of the present invention.

Fig. 2 is a schematic view of a method of preparing sesame oil having high lignan and low free fatty acid contents according to one embodiment of the present invention.

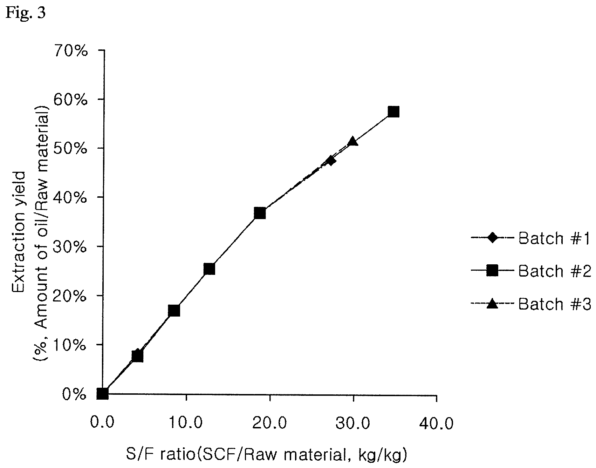

Fig. 3 is a graph showing the oil extraction yield with an S/F ratio according to one embodiment of the present invention.

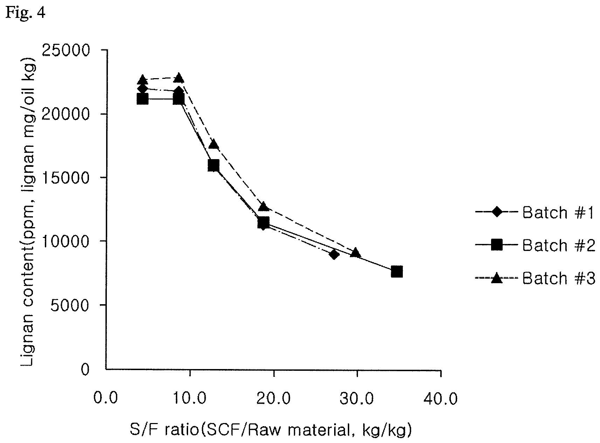

Fig. 4 is a graph showing the lignan content with an S/F ratio according to one embodiment of the present invention.

Fig. 5 is a graph showing the acid value with an S/F ratio according to one embodiment of the present invention.

[Best Mode]

Hereinafter, embodiments of the present invention will be described with reference to the accompanying drawings. In addition, descriptions of details apparent to those skilled in the art will be omitted for clarity.

In accordance with one aspect of the present invention, there is provided sesame oil having a lignan content of 14,000 ppm to 16,000 ppm and a tocopherol content of 600 ppm to 700 ppm.

Here, the term "lignan" refers to a group of low molecular weight natural products having a structure in which p-hydroxyphenylpropane compounds are linked, and non-limiting examples thereof may include sesamin, episesamin, sesamolin, sesamol, sesamolinol, sesaminol, and episesaminol.

Here, "tocopherol" is one of fat soluble vitamins such as vitamin E, and examples thereof may include $\alpha$-tocopherol, $\beta$-tocopherol, $\gamma$-tocopherol, and $\delta$-tocopherol and four types of tocotrienols ($\alpha$, $\beta$, $\gamma$, $\delta$). The tocopherol contained in the sesame oil according to the present invention may be, for example, $\gamma$-tocopherol, which can cause a synergistic effect with sesamol, which is a type of lignan contained in sesame seeds, while providing antioxidative effects.

Since most tocopherols come from abroad and are expensive, there is an increasing need for a method of more efficiently extracting tocopherols and a composition including tocopherols extracted by the same.

Within the aforementioned range of lignan and tocopherol contents, it is possible to provide sesame oil which is rich in lignans and tocopherols and thus can provide excellent antioxidation and can be stored for a long time due to antioxidative activity.

In addition, the sesame oil according to the present invention may have a free fatty acid content of 1.0 wt% to 3.0 wt%, specifically 1.0 wt% to 2.0 wt%, more specifically 1.0 wt% to 1.5 wt%.

Further, the sesame oil according to the present invention may have an acid value of 0 to 4.0, specifically 3.5 or less, more specifically 0.6 to 3.5, for example, 1.5 to 3.5 or 2.0 to 3.0.

As used herein, the term "acid value" refers to the mass of KOH in milligrams that is required to neutralize free fatty acids in one gram of fats and is used to measure rancidity of fats. A lower acid value indicates more suitability for foods.

Since the above range of acid value falls within the acid value range of sesame oil (4.0 or less) defined in Korean Food Standards Codex, the sesame oil according to the present invention is suitable for use with foods.

In accordance with a further aspect of the present invention, there is provided a method of preparing sesame oil according to the invention, comprising:

extracting sesame seeds using a supercritical fluid to provide sesame extract, wherein extraction of the sesame extract is performed at an S/F ratio of more than 0, and 30 or less;

separating the supercritical fluid from a mixture of the supercritical fluid and the sesame extract,

obtaining an early fraction by primary fractionation of the separated sesame extract at an S/F ratio of more than 0, and 10 or less.

Although a squeezing method is generally used to extract sesame oil, this method requires high temperature during extraction in order to increase a yield rate, possibly causing changes in sensory properties or generation of harmful substances such as benzopyrene.

A method of preparing sesame oil according to the present invention allows sesame oil having a high lignan content to be more efficiently prepared using advantages of a fluid under supercritical conditions.

As used herein, the term "supercritical fluid" refers to a fluid at a temperature and pressure above the critical point thereof, and is also referred to as "compressed gas" to emphasize dissolving ability thereof. Generally, although a substance has three phases, i.e. solid, liquid, and gas according to changes in temperature and pressure, the substance is brought into the fourth state, i.e. the supercritical state wherein the substance no longer a solid, liquid, or gas despite changes in temperature and pressure when reaching a temperature and pressure above the critical point thereof where distinct liquid and gas phases do not exist.

Supercritical fluid extraction (hereinafter, also referred to as "SFE") is allowed in extraction of edible fats and oils in order to provide safe food to people and to contribute to development of the food industry through introduction of new technology in accordance with Korea Food & Drug Administration Revision Notice No. 2004-41 in May, 2014.

Supercritical fluid extraction is a hybrid technology of distillation/extraction and thus has several advantages.

Specifically, since changes in pressure and temperature can cause wide changes in density of a supercritical fluid, the supercritical fluid has excellent selectivity in fractionation and separation, thereby allowing: preparation of a high purity product; complete recovery of an extraction solvent without loss; and acquisition of a purified product without any residual solvent.

In addition, a supercritical fluid improves extraction efficiency due to low viscosity and thus good penetration into a sample; allows high extraction rate due to high diffusion coefficient; allows extraction at a relatively low temperature, thereby preventing heat-loss of nutrients; facilitates separation of a residual extract from a solvent due to large difference in density between a sample and the supercritical fluid and low viscosity of the supercritical fluid.

However, since supercritical fluid extraction requires high pressure equipment and thus causes high equipment costs and maintenance costs, extraction using a supercritical fluid must be performed in high efficiency to be economically feasible.

The supercritical fluid is not particularly limited and may include, for example, carbon dioxide. Carbon dioxide has a critical pressure of 73.8 bar and a critical temperature of 31°C, relatively low as compared with other fluids, thereby allowing supercritical conditions to be easily implemented, and is nontoxic and inexpensive.

Supercritical carbon dioxide is a nonpolar solvent and is widely used in extraction of substances having low polarity, such as fats and oils. For example, polarity changes of the supercritical fluid can be easily induced by partially adding a polar substance such as alcohol, such that the fluid is properly adjusted in dissolving ability, thereby allowing the fluid to be used in extraction of various oil and fat ingredients.

In addition, even under supercritical conditions, property changes of the supercritical fluid are possible depending on temperature and pressure conditions. For example, when extraction is performed using supercritical carbon dioxide at low pressure, solubility of neutral lipid in the fluid is reduced causing increase of lignan content in an extract. Further, even when extraction is performed under high pressure conditions suitable for extraction of neutral lipid, an extract fractionated and separated in the early extraction stage has more lignan content than an extract obtained in a later extraction stage. Such an extraction method allows free fatty acid and lignan contents to be adjusted by regulating the fractionation point. For example, in order to obtain an extract having low free fatty acid content, i.e. an extract having low acid value, a fraction obtained in a fractionation section in which a raw material having a low free fatty acid content or a high neutral lipid content is used may be mixed with the extract obtained in the early extraction stage while allowing reduction in lignan content.

Generally, the amount of free fatty acids in sesame seeds may vary depending on place of origin or crop conditions. Since a raw material having low acid value is high priced, use of such a raw material can reduce raw-material competitiveness. Further, Even when the product is set to be prepared only using a raw material having low acid value, it is difficult to prepare a product that meets acid value standards while having a certain level of lignan content since free fatty acids are also concentrated in a fractionation section for a fraction having high lignan content. Therefore, there is a need for technology of removing free fatty acids from a lignan-concentrated fraction in order to provide industrial stability to a process of preparing a fraction having high lignan content using supercritical carbon dioxide.

In supercritical extraction, the amount of components varies depending on extraction conditions and the fractionation point, since solubility of each of the components varies depending on supercritical conditions. However, since components having similar solubility tend to be extracted under similar extraction conditions or at a similar fractionation point, it is difficult to completely separate such components from one another, although there is a slight difference depending on extraction conditions or the degree of fractionation.

The quality of sesame oil is affected by neutral lipids, lignans, and free fatty acids. A neutral lipid is a base material of fat and oils, and a lignan is an intrinsic component of sesame oil and has antioxidative activity. A free fatty acid is a substance providing the measure of rancidity of fat and oils and is under control through the content standard for each type of oil.

According to the present invention, a functional sesame oil meeting food standards may be prepared by maximizing lignan content and reducing free fatty acid content.

Although all neutral lipids, lignans, free fatty acids are soluble in a supercritical fluid, neutral lipids, lignans, and free fatty acids are different in solubility depending on supercritical conditions and each of neutral lipids, lignans, and free fatty acids has different contents between the early extraction stage and the later extraction stage even under the same supercritical conditions. Under supercritical conditions to obtain low density, lignans and free fatty acids are present in a relatively high proportion in an extract, causing reduction in the overall extraction efficiency and thus undesirable extraction efficacy. When fat and oil extraction conditions are set in such a way that acquisition of fat and oils can be achieved in each of the early extraction stage and the later extraction stage, lignans and free fatty acids are concentrated in an extract in the early extraction stage. Here, sesame oil in which lignan is concentrated to a level meeting food standards can be prepared by adjusting the fractionation point.

In order to reduce the content of free fatty acids in a fraction, a fraction having a low lignan content must be mixed therewith. Thus, when a raw material having a high free fatty acid content is used or lignans need to be concentrated to a high level, it is difficult to set fractionation sections meeting food standards by adjusting the fractionation point.

Thus, in some cases, concentration of lignans must be performed separately of removal of free fatty acids. For this purpose, there is a need for post-treatment which does not cause loss of lignans and degradation in sensory characteristics while removing free fatty acids. To this end, free fatty acids are preferably removed in a filtration process using at least one free fatty acid removal agent selected from magnesium silicate, magnesium oxide, and sodium hydroxide, and, more preferably using at least one free fatty acid removal agent selected from magnesium silicate and magnesium oxide.

Deacidification using sodium hydroxide requires several washing processes to remove saponified matter reacted with sodium hydroxide and residual sodium hydroxide.

If applicable, each of magnesium silicate and magnesium oxide is preferably used in an amount of 0.5 wt% to 4.0 wt%, more preferably 1.0 wt% to 4.0 wt% based on the weight of sesame oil or a sesame extract, and sodium hydroxide is preferably used in an amount of 0.1 wt% to 0.4 wt%, more preferably 0.2 wt% to 0.3 wt% based on the weight of sesame oil or sesame seed extract. In most raw materials, since free fatty acids are present in an amount of 1.5 wt% to 2.3 wt% after a lignan concentration process, it is sufficient to use a mixture of magnesium silicate and magnesium oxide in an amount about twice the amount of free fatty acids in fat and oils or to use sodium hydroxide in an amount about 0.25 times the amount of free fatty acids in fat and oils for removal of free fatty acids.

If the amount of magnesium silicate, magnesium oxide or sodium hydroxide exceeds the above range, sesame oil can suffer from loss of color and yield loss due to the fact that the sesame oil is partly mixed with an excess of the free fatty acid removal agent and then removed together, thereby adversely affecting a product.

A mixing ratio of magnesium silicate, magnesium oxide, and sodium hydroxide is not particularly limited.

It was confirmed that free fatty acids were removed without loss in lignan content using at least one free fatty acid removal agent selected from among magnesium silicate and magnesium oxide in a filtration process. In addition, through a discrimination test, it was confirmed that a sample after deacidification treatment could not be discriminated from a sample before deacidification treatment, and thus met the acid value standard for food without reduction in sensory characteristics and lignan content.

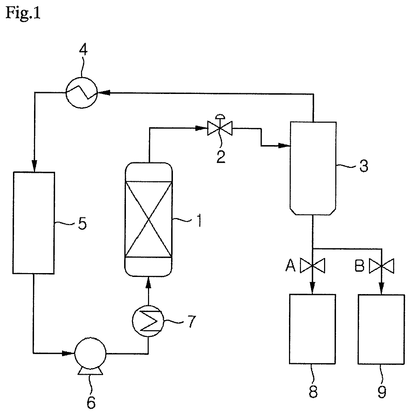

Next, a method of preparing sesame oil using supercritical fluid extraction according to the present invention will be described in detail. Fig. 1 is a schematic view of an exemplary extraction process and is not to be construed in any way as limiting the present invention.

First, an extractor 1 is filled with sesame seeds, and a supercritical fluid is supplied to a lower end portion of the extractor 1 through a heat exchanger 7 using a pump 6. Here, at least two extractors 1 may be mounted; the pump 6 may supply the supercritical fluid to the extractor 1 to adjust the pressure within the extractor; and the heat exchanger 7 may adjust the temperature of the fluid to change and/or maintain the fluid in the extractor 1 into and/or at a supercritical state.

The supercritical fluid supplied to the extractor 1 is brought into contact with the sesame seeds to extract a sesame extract from the sesame seeds and is moved up with the sesame seed extract contained therein to be discharged from the extractor 1. Then, a mixture of the supercritical fluid and the sesame seed extract may be passed through a pressure regulator 2 to be reduced in pressure and then transferred to a separator 3.

In the separator 3, the sesame seed extract is separated from the fluid, which may, in turn, be passed through a cooler 4 to be liquefied and then stored in a storage tank 5 to be reused. The storage tank 5 serves to store a fluid such as carbon dioxide and may receive, in addition to a fluid that is circulated and supplied to the storage tank, the same or different fluid from outside to replenish fluid loss during a previous process. The fluid stored in the storage tank 5 may be pressurized by the pump 6 to be turned into a supercritical state and then supplied (circulated) to the extractor 1 through the heat exchanger 7.

The sesame seed extract separated in the separator 3 may be fractionated to manufacture a product, as needed. Here, at least two fraction storage tanks 8, 9 may be mounted, and valves (A, B) may be disposed at respective inlets of the fraction storage tanks 8, 9 to obtain sesame oils having different properties at the same time by controlling opening/closing of the valves.

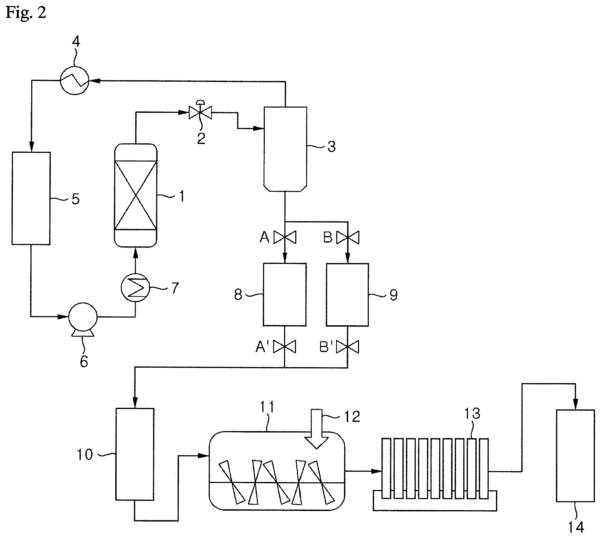

Referring to Fig. 2, in an additional process, the sesame seed extracts in the fraction storage tanks 8, 9 are transferred to an aging tank 10 for an aging process, and an oil having been subjected to aging is delivered to a mixer 11 for removal of wax and mixed with filtration aids 12 such as magnesium oxide or magnesium silicate in the mixer and then passed through the filter 13 to be purified. The purified oil is transferred to a purification tank 14 to be stored therein. In the mixer 11, a suitable amount of magnesium oxide, magnesium silicate, or sodium hydroxide may be mixed with the aged oil depending on acid value of the aged oil, thereby producing sesame oil meeting acid value standards for food (for example, acid value of 0 or more, and less than 4.0).

The above process may be continuously performed until sesame oil having desired properties is extracted from the sesame seeds, and the number of each of the above components (including the valves) may be appropriately adjusted, as needed.

Specifically, the method of preparing sesame oil according to the present invention may include: extracting a sesame extract from sesame seeds using a supercritical fluid; and separating the supercritical fluid from a mixture of

EP 3 092 904 B1

the supercritical fluid and the extract and fractionating the sesame extract to obtain an early fraction and a later fraction.

The method of preparing sesame oil according to the present invention may include: extracting a sesame seed extract from sesame seeds using a supercritical fluid; separating the supercritical fluid from a mixture of the supercritical fluid and the extract and fractionating the sesame seed extract to obtain an early fraction and a later fraction; and adding at least one free fatty acid removal agent selected from among magnesium silicate, magnesium oxide, and sodium hydroxide to the obtained early fraction to remove free fatty acids.

More specifically, the method of preparing sesame oil according to the present invention may include: extracting a sesame seed extract from sesame seeds using a supercritical fluid; separating the supercritical fluid from a mixture of the supercritical fluid and the extract and fractionating the sesame seed extract to obtain an early fraction and a later fraction; adding at least one free fatty acid removal agent selected from among magnesium silicate, magnesium oxide, and sodium hydroxide to the obtained early fraction to remove free fatty acids; and mixing the early fraction with free fatty acids removed therefrom with the later fraction.

Next, the method of preparing sesame oil according to the present invention will be more fully described.

**Pre-treatment**

The method of preparing sesame oil according to the present invention may include pre-treating sesame seeds before extracting a sesame extract from the sesame seeds. The sesame seeds are not particularly limited, and the pre-treatment may include treatment for removing harmful substances such as microorganisms, residual insecticides, and preservatives from surfaces of the sesame seeds, treatment for increasing the contact area between the sesame seeds and the supercritical fluid, treatment for increasing flavor of edible fat and oils, and the like.

Pre-treatment of sesame seeds according to the present invention may be performed by at least one selected from UV irradiation, heat treatment, peeling, pulverization, and roasting, without being limited thereto.

Extraction of sesame seed extract

Then, the sesame seeds (or pre-treated sesame seeds) are filled into the extractor, which in turn is supplied with the supercritical fluid, thereby extracting a sesame extract from the sesame seeds.

Here, extraction of the sesame extract may be performed at 120 bar to 700 bar at 40°C to 90°C, specifically at a pressure of 300 bar or more, more specifically from 400 bar to 500 bar and specifically at a temperature of 50 to 90°C, more specifically 60°C to 70°C, and may be performed at an S/F ratio (amount in kg of the used supercritical fluid per kg of the filled raw material) of more than 0, and 20 or less.

When extraction of the sesame extract is performed under the above conditions, it is possible to improve extraction efficiency.

**Separation and fractionation of sesame extract**

Then, the supercritical fluid may be separated from a mixture of the supercritical fluid and the sesame extract at 40 bar to 70 bar at 20°C to 50°C, specifically 50 bar to 60 bar at 30°C to 40°C.

Depending on desired properties of resulting sesame oil, the mixture with the supercritical fluid separated therefrom may be obtained in the form of a plurality of fractions corresponding to extraction time using difference in solubility in the supercritical fluid between components of sesame oil.

Specifically, from the separated sesame extract, the early fraction and the later fraction may be obtained through primary fractionation at an S/F ratio of more than 0, and 10 or less and secondary fractionation at an S/F ratio of more than 10, and 30 or less, respectively. Alternatively, fractionation may be performed at an S/F ratio of more than 0, and 30 or less, and sesame oil obtained at an S/F ratio of more than 0, and 30 or less may have a lignan content of 7,800 ppm or more and a tocopherol content of 300 ppm to 700 ppm.

Specifically, the early fraction may be obtained through fractionation at an S/F ratio of more than 0, and 10 or less, and the later fraction may be obtained by fractionation at an S/F ratio of more than 10, and 30 or less.

Next, the early and later fractions will be described in detail.

Early fraction

The early fraction may have a lignan content of 15,000 ppm or more, specifically 15,000 ppm to 21,000 ppm, more specifically 15,000 ppm to 18,000 ppm and have a tocopherol content of 300 ppm or more, specifically 600 ppm to 700 ppm, more specifically 650 ppm to 700 ppm.

According to the present description, sesame oil having high lignan and tocopherol contents can be prepared though fractionation according to solubility in the supercritical fluid of components without a need for a chemical process

7

using an HPLC column or the like, and the early fraction is enriched in lignans and tocopherols and thus can be applied to foods with strong flavor.

The early fraction may have an acid value of more than 4.0.

However, according to the present invention, it is possible to reduce the acid value of sesame oil by delaying the fractionation point according to the S/F ratio, or by mixing the early fraction with the later fraction or a later fraction such as a fraction obtained in another fractionation section, thereby producing sesame oil meeting food standards (for example, acid value of 4.0 or less) without additional post-treatment.

In addition, an additional process may be performed to remove free fatty acids causing acid value, as needed. In the additional process, at least one free fatty acid removal agent selected from among magnesium silicate and magnesium oxide may be added in an amount of 0.5 wt% to 4.0 wt% based on the weight of sesame oil or a sesame seed extract, or sodium hydroxide may be added in an amount of 0.1 wt% to 0.4 wt% based on the weight of sesame oil or a sesame seed extract, followed by filtration to remove free fatty acids, thereby reducing acid value of the sesame oil.

Later fraction

The later fraction may have a lignan content of 3,000 ppm or less and have an acid value of 4.0 or less, specifically 2.0 or less, more specifically 1.0 or less.

The later fraction has low acid value and mild flavor and thus can be applied to salads to which sesame oil having strong flavor is difficult to apply or pancakes and fried dishes to which sesame oil is difficult to apply until the sesame oil is purified.

According to the method of preparing sesame oil according to the present invention, two sesame oils having different properties can be prepared at the same time under a single extraction condition in a single process, as described above.

It is also disclosed here a fats and oils including the sesame oil having high lignan and tocopherol contents according to the present invention.

It is also disclosed here a fats and oils including the sesame oil having high lignan and low free fatty acid contents according to the present invention.

Specifically, the early fraction may be mixed with the later fraction to adjust acid value and flavor, and the early or later fraction may be mixed with at least one fats and oils selected from among a typical pressed sesame oil, a typical supercritically extracted sesame oil, and other fats and oils to be applied to various fields, as needed.

As used herein, the term "typical supercritically extracted sesame oil" refers to sesame oil which is obtained by extraction at an S/F ratio of more than 0, and 30 or less through supercritical fluid extraction without undergoing a separate fractionation process after separation of a sesame extract.

[Mode for Invention]

Hereinafter, the present invention will be described in more detail with reference to some examples.

**[Comparison of lignan content according to extraction method]**

**Example 1**

Preparation of typical supercritically extracted sesame oil through supercritical fluid extraction

Extraction equipment (5 1 SFE-Pilot, Natex Prozesstechnologie GesmbH) was used. Into an extractor, 2 kg of roasted sesame flour (prepared by roasting sesame seeds from India at a material temperature of 190°C, followed by pulverization) was placed, followed by extraction at an extraction pressure of 450 bar at an extraction temperature of 65°C up to an S/F ratio of 30. The extracted sesame oil was separated under conditions of a temperature of 35°C and a pressure of 55 bar, followed by removal of an underlying deposit subsequent to aging at room temperature for 1 week, thereby preparing a sample.

**Example 2**

Preparation of supercritically extracted sesame oil through supercritical fluid extraction

Extraction equipment (5 1 SFE-Pilot, Natex Prozesstechnologie GesmbH) was used. Into an extractor, 2 kg of roasted sesame flour (from Myanmar, produced by First Top Co., Ltd.) was placed, followed by extraction at an extraction pressure of 450 bar at an extraction temperature of 65°C up to an S/F ratio of 30, wherein a sesame extract was obtained in each fractionation section. The extracted sesame oil was separated under conditions of a temperature of 35°C and a pressure of 55 bar, followed by removal of an underlying deposit subsequent to aging at room temperature for 1 week, thereby preparing a sample.

## Example 3

Preparation of supercritically extracted sesame oil having high lignan content through supercritical fluid extraction

Extraction equipment (5 1 SFE-Pilot, Natex Prozesstechnologie GesmbH) was used. Into an extractor, 2 kg of roasted sesame flour (from Myanmar, produced by First Top Co., Ltd.) was placed, followed by extraction at an extraction pressure of 450 bar at an extraction temperature of 65°C up to an S/F ratio of 10. The extracted sesame oil was separated under conditions of a temperature of 35°C and a pressure of 55 bar, followed by removal of an underlying deposit subsequent to aging at room temperature for 1 week, thereby preparing a sample.

## Comparative Example 1

Preparation of sesame oil by pressing

The same raw material as in Example 1 was placed into a presser (SSC100, SHINSUNG Food Machine) preheated to 180°C, thereby obtaining a pressed oil, which in turn was left at room temperature for 1 week, followed by removal of an underlying deposit, thereby preparing a sample.

## Experimental Example 1

0.5 g of each of the samples prepared in Example 1 and Comparative Example 1 was dissolved in a solvent (n-Hexane:IPA = 98:2) and filtered at a pore size of 0.45 $\mu$m, thereby preparing an analysis sample.
Lignan analysis was performed three times under equipment conditions listed in Table 1. Lingan contents (unit: ppm) according to extraction methods are shown in Table 2.

**Table 1**

| Detector | PDA detector 290 nm | | (Agilent Technologies) |
|---|---|---|---|
| Column | Luna silica 4.6mm * 150mm, 3$\mu$m, Phenomenex Co., Ltd. | | |
| Mobile phase | A: hexane : ethyl acetate = 9 : 1 | | |
| | B: hexane : ethyl acetate = 5 : 5 | | |
| | Time (min) | A | B |
| | 0 | 100 | 0 |
| | 4 | 100 | 0 |
| | 20 | 20 | 80 |
| | 25 | 100 | 0 |
| | 30 | 100 | 0 |
| Injection Volume | 10 $\mu$l | | |
| Flow rate | 1.0 mL/min | | |
| Temperature | 30°C | | |
| Execution time | 30 min | | |

**Table 2**

| Difference in lignan content according to extraction method (unit: ppm) | | | |
|---|---|---|---|
| Analysis | Supercritical extraction (Example 1) | Pressing (Comparative Example 1) | Rate of increase as compared with pressing |
| 1 | 7,939 | 5,823 | + 36% |
| 2 | 7,989 | 5,910 | + 35% |
| 3 | 7,945 | 5,849 | + 36% |

As shown in Table 2, it can be seen that sesame oil obtained by pressing had a lignan content of less than 6,000 ppm, and sesame oil obtained through supercritical fluid extraction had a lignan content of 78,000 ppm or more. In other words, lignan content of the sesame oil obtained by supercritical fluid extraction was increased by about 35% as compared with that of the sesame oil obtained by pressing.

**Experimental Example 2**

Analysis of extraction yield, lignan and benzopyrene content, and acid value according to flow rate of fluid

For the sesame oil prepared in Example 1, lignan content was measured by HPLC under the same conditions as in Experimental Example 1; acid value was measured in accordance with 1.1.5.3.1 Acid value Measurement Method of General Component Testing Methods in Korean Food Standards Codex; and benzopyrene content was measured in accordance with 7.8.1 Analytical Method For Benzopyrene In Edible Fat and Oil of Analytical Methods For Hazardous Materials In Food. Here, the lignan content, acid value, and benzopyrene content were each measured three times.
Extraction yields shown in Table 3 were calculated according to Equation 1:

$$\text{Extraction yield (\%)} = (\text{Amount of extracted fats and oils/Total amount of filled raw material}) \times 100 \qquad \text{---- (1)}$$

**Table 3**

| Analysis | $CO_2$ (S/F ratio) | Extraction yield (%) | Lignan (ppm) | Acid value (mg KOH/g) | B(a)P (ppb) |
|---|---|---|---|---|---|
| 1 | 4.2 | 8.39% | 22010 | 4.70 | 0.94 |
| | 8.5 | 8.64% | 19657 | 3.75 | 0.92 |
| | 12.7 | 8.39% | 5966 | 1.30 | 0.95 |
| | 18.6 | 11.53% | 1557 | 0.71 | 0.99 |
| | 27.1 | 10.85% | 1196 | 0.57 | 0.87 |
| 2 | 4.2 | 7.80% | 21173 | 4.93 | 0.89 |
| | 8.5 | 9.24% | 21121 | 4.26 | 0.87 |
| | 12.7 | 8.56% | 5694 | 1.48 | 0.83 |
| | 18.6 | 11.61% | 1785 | 0.79 | 0.88 |
| | 34.7 | 20.76% | 879 | 0.61 | 0.88 |
| 3 | 4.2 | 8.14% | 22692 | 4.55 | 0.92 |
| | 8.5 | 8.81% | 23074 | 4.37 | 0.89 |
| | 12.7 | 8.90% | 8064 | 1.79 | 0.88 |
| | 18.6 | 10.93% | 2367 | 0.87 | 0.94 |
| | 29.7 | 15.25% | 1135 | 0.67 | 0.96 |

As shown in Table 3, it was confirmed that, in all repeated tests, the amount of the extracted sesame oil was generally proportional to the flow rate (see Fig. 2). In addition, through analysis of the content of lignans in a fraction obtained at each flow rate, it was confirmed that lignans tend to be extracted in a reproducible manner to a certain degree in extraction of sesame oil through supercritical fluid extraction. In other words, it could be seen that most lignans were extracted in the early extraction stage, and the amount of extracted lignans sharply decreased after that and then gradually decreased toward the later extraction stage.

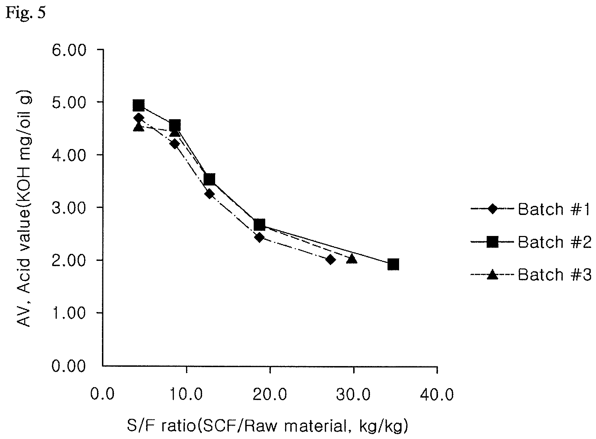

On the other hand, free fatty acids also had a tendency to be mostly extracted in the early extraction stage (see Fig. 5). Thus, it could be seen that, in extraction using a raw material having a normal free fatty acid content, it would be difficult to prepare sesame oil meeting food standards using a sesame extract obtained in a fractionation section in which the majority of lignans are extracted, although such a sesame extract can be used for separating lignans therefrom, followed by purification.

Further, benzopyrene, the content of which is a measure used for management of sesame oils, was present in an almost constant amount in each fraction from the beginning of extraction to the end without significant changes over the extraction time. Thus, it is considered that, unlike lignans and free fatty acids, the content of benzopyrene in an extract depends upon the content of benzopyrene in a raw material.

**Experimental Example 3**

Analysis of lignan and tocopherol content according to flow rate of fluid

A sesame seed extract was extracted and separated from sesame seeds in the same manner as in Example 1, followed by fractionation of the extract at an S/F ratio as listed in Table 5.

For each fraction, lignan and tocopherol contents were quantified by HPLC as in Experimental Example 1. Here, 20 g of a sample was weighed and placed in a 100 ml mess flask, which in turn was fully filled with n-hexane, thereby preparing an assay sample.

Mobile phase and analysis conditions are as listed in Table 4; an extraction ratio and content of components in an extract in each fractionation section are shown in Table 5; and an extraction yield in each fractionation section and a rate of increase in content of each component as compared with a typical supercritically extracted sesame oil are shown in Table 6.

Extraction ratios in Table 5 were calculated by Equation 2, and extraction yields in Table 6 were calculated by Equation 1 in Experimental Example 2.

<Equation 2>

$$\text{Extraction ratio (\%)} = (\text{Extraction amount in each fractionation section/Total extraction amount}) \times 100$$

**Table 4**

| Item | | Equipment condition |
|---|---|---|
| HPLC | Column | ► Supeclosil LC-NH2NP (250 mm*4.6 mm*5 $\mu$m) ► temperature: 30°C |
| | Detector | ► VWD:298 nm |
| | Solvent | ► Hexane:IPA=98:2 (v/v) |
| | Flow Rate | ► 1.5 ml/min |
| | Injection Volume | ► 10 $\mu\ell$ |

**Table 5**

| $CO_2$ (S/F ratio) | Extraction ratio (%) | Lignan (ppm) | $\gamma$-tocopherol (ppm) |
|---|---|---|---|
| 0.00 to 2.08 | 7.9% | 21,953 | 692 |
| 2.08 to 4.17 | 8.6% | 21,958 | 692 |
| 4.17 to 8.33 | 16.7% | 21,284 | 683 |

(continued)

| CO$_2$ (S/F ratio) | Extraction ratio (%) | Lignan (ppm) | $\gamma$-tocopherol (ppm) |
|---|---|---|---|
| 8.33 to 12.50 | 16.0% | 6,574 | 644 |
| 12.50 to 15.00 | 10.3% | 2,500 | 480 |
| 15.00 to 18.33 | 10.6% | 1,903 | 441 |
| 18.33 to 30.00 | 30.0% | 1,070 | 288 |

**Table 6**

| Flow rate (S/F ratio) | Extraction yield (%) | Lignan | $\gamma$-tocopherol |
|---|---|---|---|
| 2.08 | 7.9% | 244% | 135% |
| 4.17 | 16.5% | 244% | 135% |
| 8.33 | 33.1% | 240% | 134% |
| 12.50 | 49.2% | 186% | 131% |
| 15.00 | 59.5% | 158% | 125% |
| 18.33 | 70.0% | 138% | 119% |
| 30.00 | 100.0% | 100% | 100% |

※ The general supercritically extracted sesame oil was obtained by extraction at an S/F ratio of 0 to 30.

From the result of analyzing lignan and $\gamma$-tocopherol contents for each fraction shown in Tables 5 and 6, it can be seen that $\gamma$-tocopherol was contained in an extract obtained in the early extraction stage (see Table 5).

With the result that, for each fractionation point, quality of the sesame oil was compared with quality of the sesame oil obtained by general supercritical extraction based on the above analysis results (see Table 6), it could be seen that a concentration rate of $\gamma$-tocopherol was increased by 30% or more as compared with the general sesame oil, although $\gamma$-tocopherol exhibited lower concentration rate than lignan.

**Experimental Example 4**

Analysis of flavor compound and content according to flow rate of fluid

Analysis of flavor compounds was conducted by a process in which scent particles were captured under conditions listed in Table 4 by solid phase microextraction, followed by analysis using a GC-mass spectrometer under conditions listed in Table 7. Results of analyzing flavor compounds of each fraction are shown in Table 8.

**Table 7**

| Amount of sample | 20 mL |
|---|---|
| Fiber | Carboxen-Polydimethylsiloxane (PDMS) fiber (Supelco) |
| Equilibrium condition | Ambient temperature, 30 min, 400 rpm, 30°C |
| Adsorption condition | Ambient temperature, 10 min, 30°C |
| Desorption condition | 250°C (inlet temperature), 5 min |
| | |
| Column | DB-5MS (30m x 0.25m x 025$\mu$m, J&W Scientific) |
| Injection mode | Splitless mode (purge flow split vent 8.0 mL/5 min) |
| Inlet temperature | 250°C |

(continued)

| Oven temperature | 40°C, 6 min → 4°C/min →150°C→10°C/min→220°C, 10 min (cleaning of a column was considered although all of index components could be detected within 20 minutes) |
| --- | --- |
| Detector temperature | 250°C |
| Mass scan range | 35-550 m/z |
| Flow rate (He) | 0.8 mL/min (pressure 4.73 psi) |
| Fiber cleaning method | Inlet temp. 280°C<br>60°C, 1 min → 50°C/min →220°C, 10mm |
| Search library | wiley7n. 1 |

**Table 8**

| S/F ratio Name of compound | 0 to 5 | 5 to 10 | 15 to 20 | 20 to 30 |
| --- | --- | --- | --- | --- |
| 2-methyl pyrazine | 431% | 199% | 165% | 100% |
| 2,5-dimethyl-pyrazine | 1537% | 350% | 274% | 100% |

The same amount of samples were placed into vials having the same size, respectively, and solid phase microextractors (SPME) installed in the respective vials at a given temperature for a given period of time, thereby allowing flavor compounds to adsorb thereon, followed by analysis using GC-MS. As a result, it was confirmed that flavor compounds in each fraction were decreased in amount over time, as shown in Table 8. It was measured that 2-methyl pyrazine was 5 times more present and 2,5-dimethyl-pyrazine was 15 times more present in the first fraction than in the last fraction. Actually, it could be easily determined that flavors of the fractions became mild from the first fraction towards the last fraction.

**Experimental Example 5**

Analysis of lignan content and acid value of fraction according to fractionation point

Extraction yields and lignan contents listed in Table 5, measured in Experimental Example 3, are shown in Table 9 based on before/after each fractionation point. Acid value before/after each fractionation point was measured in the same manner as in Experimental Example 2. Results are shown in Table 9.

**Table 9**

| Fractionation point | Extraction yield (%) | | Lignan (ppm) | | Acid value (mg KOH/g) | |
| --- | --- | --- | --- | --- | --- | --- |
| | Before | After | Before | After | Before | After |
| 2.08 | 7.9% | 92.1% | 21,953 | 7840 | 4.92 | 1.86 |
| 4.17 | 16.5% | 83.5% | 21,956 | 6380 | 4.82 | 1.56 |
| 8.33 | 33.1% | 66.9% | 21,618 | 2665 | 4.47 | 0.92 |
| 12.08 | 49.2% | 50.8% | 16,711 | 1432 | 3.51 | 0.73 |
| 15.00 | 59.5% | 40.5% | 14,238 | 1187 | 3.08 | 0.66 |
| 18.33 | 70.0% | 30.0% | 12,362 | 970 | 2.73 | 0.62 |
| 30.00 | 100.0% | 0.0% | 8,948 | - | 2.10 | - |

As shown in Table 9, it can be seen that a collection of fractions obtained up to an S/F ratio of 8.33, allowing lignans to be dissolved at the highest concentration, accounts for 33% of the total extraction amount, and lignan content of the collection is twice more (about 259%) that of the sesame oil obtained by general supercritical extraction in Example 1. However, the collection had an acid value of 4.47, which was outside the acid value range prescribed in food standards.
Although subsequent fractions are sharply decreased in lignan content causing reduction in the overall lignan content, these fractions are also sharply decreased in content of free fatty acids, which cause acid value, thereby allowing production of sesame oil meeting food standards. It was confirmed that a collection of fractions obtained up to an S/F ratio of 12.08 had a lignan content of 16,711 ppm, which is 1.87 times that of the sesame oil obtained by general supercritical extraction; had an acid value of 3.51, which meets food standards; and had an extraction yield of 49.2% nearly half the total extraction yield, thereby allowing increase in output.

**Experimental Example 6**

A fraction was obtained using sesame flours having different acid value at each flow rate by supercritical extraction, followed by measuring acid value and lignan content of the fraction. Based on measurement results, acid value and lignan content of a collection of fractions was calculated. Results are shown in Table 10.

**Table 10**

| Extraction amount, acid value, and lignan content according to acid value of raw material | | | | | | | | | |
| Flow rate | Extraction amount | | | Acid value (KOH mg/g) | | | Lignan (ppm) | | |
| S/F ratio | Acid value 2.11 | Acid value 2.40 | Acid value 3.29 | Acid value 2.11 | Acid value 2.40 | Acid value 3.29 | Acid value 2.11 | Acid value 2.40 | Acid value 3.29 |
|---|---|---|---|---|---|---|---|---|---|
| 2.4 | 14% | 14% | 13% | 6.05 | 7.09 | 9.59 | 25,270 | 23,059 | 22,798 |
| 4.8 | 25% | 24% | 23% | 5.11 | 6.22 | 8.60 | 25,577 | 23,844 | 23,220 |
| 7.1 | 37% | 35% | 34% | 4.12 | 5.19 | 7.19 | 21,682 | 20,805 | 20,334 |
| 9.5 | 49% | 45% | 44% | 3.42 | 4.31 | 6.06 | 18,072 | 17,324 | 17,167 |
| 14.3 | 70% | 66% | 64% | 2.65 | 3.23 | 4.62 | 13,528 | 12,634 | 12,648 |
| 19.1 | 88% | 85% | 83% | 2.28 | 2.66 | 3.75 | 11,225 | 10,015 | 10,077 |
| 23.8 | 94% | 95% | 94% | 2.19 | 2.46 | 3.42 | 10,601 | 9,071 | 9,045 |
| 33.3 | 100% | 100% | 100% | 2.11 | 2.40 | 3.29 | 10,181 | 8,748 | 8,628 |

In a test executed using a raw material having an acid value of 2.11, acid value standards for food were met at an S/F ratio of 9.5; in a test executed using a raw material having an acid value of 2.40, acid value standards for food were met at an S/F ratio of 14.3; and in a test executed using a raw material having an acid value of 3.29, acid value standards for food were met at a flow rate of 19.1. Here, the acid value standard for sesame oils is 4.0 or less, and all of materials used in the tests have no problem in acid value quality when extraction is performed by pressing.

Comparing lignan contents of sesame oils prepared by adjusting the flow rate to meet acid value standards, sesame oil prepared using a raw material having an acid value of 2.11 had a lignan content of 18,072 ppm, sesame oil prepared using a raw material having an acid value of 2.40 had a lignan content of 12,634 ppm, and sesame oil prepared using a raw material having an acid value of 3.29 had a lignan content of 10,077 ppm. This is because sesame oil obtained in the early extraction stage is required to be mixed with sesame oil obtained in the later extraction stage in order to meet acid value standards for food, since, as the acid value of a raw material is increased, the acid value of sesame oil extracted at the early extraction stage becomes more.

**Examples 4 to 5**

**Example 4**

Lignan content and acid value were measured in the same manner as in Experimental Example 1 and Experimental Example 2, respectively, with a fractionation point delayed to an S/F ratio of 12.08 to remove free fatty acids in sesame oil.

**Example 5**

Lignan content and acid value were measured in the same manner as in Experimental Example 1 and Experimental Example 2, respectively, with fractionation point adjusted to an S/F ratio of 8.33 to obtain a fraction in which lignans are highly concentrated in sesame oil.

For each sample prepared in Examples 1, 4, and 5, lignan content and acid value were measured. Results are shown in Table 11.

**Table 11**

|  | Without any treatment (Example 1) | Delaying fractionation point to predetermined S/F ratio (Example 4) | Fractionation for fraction rich in lignan (Example 5) |
|---|---|---|---|
| Lignan content (ppm) | 8,459 | 16,711 | 21,618 |
| Rate of increase in lignin content (%) | 100.0% | 198% | 256% |
| Acid value | 2.1 | 3.5 | 4.47 |

As shown in Table 11, it can be seen that it is necessary to remove free fatty acids in order to use highly concentrated lignans in the early extraction stage without diluting other oils.

**Examples 6 to 9**

Magnesium silicate (Dalsorb™, Dallas Group of America) was added to the sesame oil obtained in Example 2 in an amount of 0.5 wt% (Example 6), 1 wt% (Example 7), 2 wt% (Example 8), and 3 wt% (Example 9) based on the weight of the sesame oil, followed by removal of magnesium silicate using Whatman filter paper 5C subsequent to stirring, thereby preparing a sample. Changes in acid value and lignan content of the prepared sample were measured, and results are shown in Table 12. Here, the above treatment was performed at room temperature in consideration of workability and flavor loss of the sesame oil, and the treatment period of time was fixed to 2 hours, which does not cause reduction in acid value despite increase in the period of time for which subsequent stirring is performed.

**Example 10**

To the sesame oil obtained in Example 2, an aqueous solution obtained by dissolving 0.3 wt% of sodium hydroxide (based on the weight of the sesame oil) in water having a weight of 5 times the weight of the sodium hydroxide was added, followed by removal of saponified matter using Whatman filter paper 5C, and the filtered oil separated into layers, allowing removal of a bottom aqueous fraction. Then, a process in which hot water having the same mass as the sesame oil was added to and mixed with the oil to remove the aqueous solution was repeated three times to remove saponified matter and the sodium hydroxide, thereby preparing a sample. Changes in acid value and lignan content of the prepared sample were measured, and results are shown in Table 12.

**Table 12**

| Item | Input of magnesium silicate (% by weight based on the weight of sesame oil) | Acid value (KOH mg/g) | Lignan (ppm) |
|---|---|---|---|
| Example 3 | 0.0% | 3.29 | 15,377 |
| Example 6 | 0.5% | 2.82 | 15,379 |
| Example 7 | 1.0% | 2.27 | 15,349 |
| Example 8 | 2.0% | 1.22 | 15,392 |
| Example 9 | 3.0% | 0.21 | 15,373 |
| Example 10 | Input of sodium hydroxide: 0.3% by weight based on the weight of sesame oil | 0.3 | 15,300 |

As shown in Table 12, it can be seen that in Examples 6 to 10 in which deacidification with magnesium silicate or sodium hydroxide was performed, removal of free fatty acids did not affect lignan content.

**Experimental Example 7**

Changes in lignan content and acid value according to mixed ratio of early fraction to late fraction

During supercritical extraction, a sesame extract was fractionated at an S/F ratio of 10.0, thereby obtaining an early fraction, and a sesame extract was fractionated, thereby obtaining a later fraction. Results of analysis of each fraction are shown in Table 13. Changes in lignan content and acid value caused by mixing the early fraction having high lignan content with the later fraction were simulated. Results are shown in Table 14.

During supercritical extraction, solubility of lignans reached the maximum at an S/F ratio of 8.33.

**Table 13**

|  | S/F ratio | Output proportion (%) | Lignan (ppm) | Acid value (mg KOH/g) |
|---|---|---|---|---|
| Early traction | 0 ~ 10.0 | 33.10% | 21,618 | 4.47 |
| Later fraction | 10.1 ~ 30 | 66.90% | 2,665 | 0.92 |

**Table 14**

| Early fraction | Later fraction | Lignan (ppm) | Acid value |
|---|---|---|---|
| 100% | 0% | 21618 | 4.47 |
| 90% | 10% | 19723 | 4.12 |
| 80% | 20% | 17828 | 3.76 |
| 70% | 30% | 15932 | 3.41 |
| 60% | 40% | 14037 | 3.05 |
| 50% | 50% | 12142 | 2.70 |
| 40% | 60% | 10246 | 2.34 |
| 30% | 70% | 8351 | 1.99 |
| 20% | 80% | 6456 | 1.63 |
| 10% | 90% | 4560 | 1.28 |
| 0% | 100% | 2665 | 0.92 |

From the results shown in Table 14, it can be seen that the lignan content and acid value can be advantageously controlled by adjusting the mixed ratio of fractions, as needed, to produce desired quality products.

**Experimental Example 8**

The sesame oil obtained in Example 9 (the sample obtained by mixing 3 wt% of magnesium silicate with the sesame oil obtained in Example 2, followed by filtration) was mixed with the sesame oil obtained in Example 3 (the sample having high lignan content through supercritical extraction) in a proportion of 35% and 70%, thereby preparing samples, which in turn were evaluated as to preference. Results are shown in Table 15. Here, a panel of 14 persons participated in a preference survey, and seasoned spinach prepared by adding 0.5% of salt and 10% of each of the samples to steamed spinach was provided to the panel.

**Table 15**

| Mixed ratio of deacidified oil (% based on the total weight of sample) | Preference level |
|---|---|
| 0% | 6.14 |
| 35% | 7.21 |
| 70% | 6.00 |

As shown in Table 15, the panel expressed a slightly low level of preference for a treatment group in which the deacidified oil was mixed in a proportion of 70%, but without a significant difference in preference level, and the panel expressed an increased level of preference for a treatment group in which the deacidified oil was mixed in a proportion of 35%. Therefore, it can be seen that there is no preference tendency according to the mixed ratio, and treatment with magnesium silicate does not adversely affect sensory properties.

**<List of Reference Numerals>**

1: Extractor: Section in which sesame flour is filled and brought into contact with supercritical carbon dioxide, thereby allowing sesame oil to be extracted
2: Pressure regulator: Equipment for maintaining the pressure in the extractor at a constant level.
3: Separator: Device for separating carbon dioxide from an extract.
4: Cooler: Device for cooling separated gaseous carbon dioxide to liquid phase
5: Carbon dioxide storage tank: Equipment for storing liquefied carbon dioxide
6: Pump: Equipment for supplying carbon dioxide
7: Heat exchanger: Device for adjusting the temperature of supercritical carbon dioxide
8: Fraction storage tank A: Equipment for storing an early fraction
9: Fraction storage tank B: Equipment for storing a later fraction
A: Valve of fraction storage tank 1
B: Valve of fraction storage tank 2
10: Aging tank: Tank for leaving supercritically extracted oil at a constant temperature to leave wax and perform aging
11: Mixer: Equipment for mixing sesame oil with diatomite and magnesium silicate, magnesium oxide, or sodium hydroxide to remove wax and free fatty acids
12 Filtration aids: For example, diatomite and magnesium silicate are added in a proper amount, followed by stirring for a certain period of time
13: Filter press: Device for filtering out filtration aids agglomerated with free fatty acids and wax
14: Product tank: Tank for storing produced oil

**Claims**

1. Sesame oil having a lignan content of 14,000 ppm to 16,000 ppm and a tocopherol content of 600 ppm to 700 ppm.

2. The sesame oil according to claim 1, wherein the sesame oil has an acid value of 4.0 or less.

3. The sesame oil according to claim 1, wherein the lignan comprises at least one selected from sesamin, episesamin, sesamolin, sesamol, sesamolinol, sesaminol, and episesaminol.

4. The sesame oil according to claim 1, wherein the tocopherol is $\gamma$-tocopherol.

5. A method of preparing sesame oil of claim 1, comprising:

   extracting sesame seeds using a supercritical fluid to provide sesame extract, wherein extraction of the sesame extract is performed at an S/F ratio of more than 0, and 30 or less;
   separating the supercritical fluid from a mixture of the supercritical fluid and the sesame extract,
   obtaining an early fraction by primary fractionation of the separated sesame extract at an S/F ratio of more than 0, and 10 or less.

6. The method according to claim 5, further comprising
   removing free fatty acids by adding at least one free fatty acid removal agent selected from among magnesium silicate, magnesium oxide, and sodium hydroxide to the obtained sesame extract.

7. The method according to claim 6, wherein the free fatty acid removal agent is at least one selected from magnesium silicate and magnesium oxide.

8. The method according to claim 5 or 6, wherein extraction of the sesame extract is performed at a pressure of 120 bar to 700 bar and at a temperature of 40°C to 90°C.

9. The method according to claim 5 or 6, wherein separation of the supercritical fluid is performed at a pressure of 40 bar to 70 bar and at a temperature of 20°C to 50°C.

10. The method according to claim 5 or 6, wherein the supercritical fluid is carbon dioxide.

11. The method according to claim 5, further comprising:

obtaining a later fraction by secondary fractionation from the separated sesame extract at an S/F ratio of more than 10, and 30 or less; and
obtaining the sesame oil by combining the early fraction and the later fraction.

12. The method according to claim 6, further comprising:

obtaining a later fraction by secondary fractionation from the separated sesame extract at an S/F ratio of more than 10, and 30 or less before removal of free fatty acids; and
removing free fatty acids from the early fraction.

13. The method according to claim 6 or 12, wherein magnesium silicate or magnesium oxide is added in an amount of 0.5 wt% to 4.0 wt% based on the weight of the sesame oil or the sesame extract.

14. The method according to claim 6 or 12, wherein sodium hydroxide is added in an amount of 0.1 wt% to 0.4 wt% based on the weight of the sesame oil or the sesame extract.

15. The method according to claim 11 or 12, wherein the early fraction has a lignan content of 15,000 ppm or more and a tocopherol content of 300 ppm to 700 ppm.

16. The method according to 15, having free fatty acids in an amount of 1.0 wt% to 3.0 wt%.

17. The method according to claim 11 or 12, wherein the later fraction has a lignan content of 3,000 ppm or less and has an acid value of 0 to 1.0.

18. Sesame oil prepared by the method according to any one of claims 5, 6, 11, and 12.

**Patentansprüche**

1. Sesamöl, das einen Lignangehalt von 14.000 ppm bis 16.000 ppm und einen Tocopherolgehalt von 600 ppm bis 700 ppm aufweist.

2. Sesamöl nach Anspruch 1, wobei das Sesamöl einen Säurewert von 4,0 oder weniger aufweist.

3. Sesamöl nach Anspruch 1, wobei das Lignan mindestens eines ausgewählt unter Sesamin, Episesamin, Sesamolin, Sesamol, Sesamolinol, Sesaminol und Episesaminol umfasst.

4. Sesamöl nach Anspruch 1, wobei das Tocopherol γ-Tocophorol ist.

5. Verfahren zum Herstellen von Sesamöl nach Anspruch 1, umfassend:

Extrahieren von Sesamsamen unter Anwendung eines superkritischen Fluids, um Sesamextrakt bereitzustellen, wobei die Extraktion des Sesamextrakts bei einem S/F-Verhältnis von mehr als 0 und 30 oder weniger ausgeführt wird,
Trennen des superkritischen Fluids von einer Mischung des superkritischen Fluids und des Sesamextrakts,
Erhalten einer frühen Fraktion durch primäre Fraktionierung des in einem S/F-Verhältnis von mehr als 0 und 10 oder weniger getrennten Sesamextrakts.

6. Verfahren nach Anspruch 5, ferner umfassend

Entfernen freier Fettsäuren durch Zusetzen mindestens eines Entfernungsmittels für freie Fettsäure ausgewählt unter Magnesiumsilicat, Magnesiumoxid und Natriumhydroxid, um den Sesamextrakt zu erhalten.

7. Verfahren nach Anspruch 6, wobei das Entfernungsmittel für freie Fettsäure mindestens eines ist ausgewählt unter Magnesiumsilicat und Magnesiumoxid.

8. Verfahren nach Anspruch 5 oder 6, wobei die Extraktion des Sesamextrakts bei einem Druck von 120 bar bis 700 bar und bei einer Temperatur von 40 °C bis 90 °C ausgeführt wird.

9. Verfahren nach Anspruch 5 oder 6, wobei die Trennung des superkritischen Fluids bei einem Druck von 40 bar bis 70 bar und bei einer Temperatur von 20 °C bis 50 °C ausgeführt wird.

10. Verfahren nach Anspruch 5 oder 6, wobei das superkritische Fluid Kohlendioxid ist.

11. Verfahren nach Anspruch 5, ferner umfassend:

Erhalten einer späteren Fraktion durch sekundäres Fraktionieren von dem in einem S/F-Verhältnis von mehr als 10 und 30 oder weniger getrennten Sesamextrakt; und
Erhalten des Sesamöls durch Kombinieren der frühen Fraktion und der späteren Fraktion.

12. Verfahren nach Anspruch 6, ferner umfassend:

Erhalten einer späteren Fraktion durch sekundäres Fraktionieren von dem in einem S/F-Verhältnis von mehr als 10 und 30 oder weniger getrennten Sesamextrakt vor Entfernen der freien Fettsäuren;
und
Entfernen von freien Fettsäuren von der frühen Fraktion.

13. Verfahren nach Anspruch 6 oder 12, wobei Magnesiumsilicat oder Magnesiumoxid in einer Menge von 0,5 Gew.-% bis 4,0 Gew.-%, auf das Gewicht des Sesamöls oder des Sesamextrakts bezogen, zugegeben wird.

14. Verfahren nach Anspruch 6 oder 12, wobei Natriumhydroxid in einer Menge von 0,1 Gew.-% bis 0,4 Gew.-%, auf das Gewicht des Sesamöls oder des Sesamextrakts bezogen, zugegeben wird.

15. Verfahren nach Anspruch 11 oder 12, wobei die frühere Fraktion einen Lignangehalt von 15.000 ppm oder mehr und einen Tocopherolgehalt von 300 ppm bis 700 ppm aufweist.

16. Verfahren nach 15, das freie Fettsäuren in einer Menge von 1,0 Gew.-% bis 3,0 Gew.-% aufweist.

17. Verfahren nach Anspruch 11 oder 12, wobei die spätere Fraktion einen Lignangehalt von 3.000 ppm oder weniger aufweist und einen Säurewert von 0 bis 1,0 aufweist.

18. Sesamöl, das durch das Verfahren nach einem der Ansprüche 5, 6, 11 und 12 hergestellt wird.

**Revendications**

1. Huile de sésame présentant une teneur en lignane de 14 000 ppm à 16 000 ppm et une teneur en tocophérol de 600 ppm à 700 ppm.

2. Huile de sésame selon la revendication 1, dans laquelle l'huile de sésame présente une valeur acide de 4,0 ou inférieure.

3. Huile de sésame selon la revendication 1, dans laquelle le lignane comprend au moins un choisi parmi la sésamine, l'épisésamine, la sésamoline, le sésamol, le sésamolinol, le sésaminol, et l'épisésaminol.

4. Huile de sésame selon la revendication 1, dans laquelle le tocophérol est le $\gamma$-tocophérol.

5. Procédé de préparation d'huile de sésame selon la revendication 1, comprenant :

l'extraction de graines de sésame utilisant un fluide supercritique pour fournir un extrait de sésame, dans lequel l'extraction de l'extrait de sésame est réalisée à un rapport S/F supérieur à 0, et de 30 ou inférieur ;
la séparation du fluide supercritique d'un mélange du fluide supercritique et de l'extrait de sésame,
l'obtention d'une fraction initiale par fractionnement primaire de l'extrait de sésame séparé à un rapport S/F supérieur à 0, et de 10 ou inférieur.

6. Procédé selon la revendication 5, comprenant de plus
l'élimination d'acides gras libres par addition d'au moins un agent d'élimination d'acide gras libre choisi parmi le silicate de magnésium, l'oxyde de magnésium, et l'hydroxyde de sodium à l'extrait de sésame obtenu.

7. Procédé selon la revendication 6, dans lequel l'agent d'élimination d'acide gras libre est au moins un choisi parmi le silicate de magnésium et l'oxyde de magnésium.

8. Procédé selon la revendication 5 ou 6, dans lequel l'extraction de l'extrait de sésame est réalisée à une pression de 120 bars à 700 bars et à une température de 40°C à 90°C.

9. Procédé selon la revendication 5 ou 6, dans lequel la séparation du fluide supercritique est réalisée à une pression de 40 bars à 70 bars et à une température de 20°C à 50°C.

10. Procédé selon la revendication 5 ou 6, dans lequel le fluide supercritique est le dioxyde de carbone.

11. Procédé selon la revendication 5, comprenant de plus :

   l'obtention d'une fraction ultérieure par fractionnement secondaire de l'extrait de sésame séparé à un rapport S/F supérieur à 10, et de 30 ou inférieur ; et
   l'obtention de l'huile de sésame par combinaison de la fraction initiale et de la fraction ultérieure.

12. Procédé selon la revendication 6, comprenant de plus :

   l'obtention d'une fraction ultérieure par fractionnement secondaire de l'extrait de sésame séparé à un rapport S/F supérieur à 10, et de 30 ou inférieur avant l'élimination d'acides gras libres ; et
   l'élimination d'acides gras libres de la fraction initiale.

13. Procédé selon la revendication 6 ou 12, dans lequel du silicate de magnésium ou de l'oxyde de magnésium est ajouté dans une quantité de 0,5 % en masse à 4,0 % en masse sur la base de la masse de l'huile de sésame ou de l'extrait de sésame.

14. Procédé selon la revendication 6 ou 12, dans lequel de l'hydroxyde de sodium est ajouté dans une quantité de 0,1 % en masse à 0,4 % en masse sur la base de la masse de l'huile de sésame ou de l'extrait de sésame.

15. Procédé selon la revendication 11 ou 12, dans lequel la fraction initiale présente une teneur en lignane de 15 000 ppm ou supérieure et une teneur en tocophérol de 300 ppm à 700 ppm.

16. Procédé selon la revendication 15, présentant des acides gras libres dans une quantité de 1,0 % en masse à 3,0 % en masse.

17. Procédé selon la revendication 11 ou 12, dans lequel la fraction ultérieure présente une teneur en lignane de 3 000 ppm ou inférieure et présente une valeur acide de 0 à 1,0.

18. Huile de sésame préparée par le procédé selon l'une quelconque des revendications 5, 6, 11, et 12.

Fig.1

Fig. 2

Fig. 3

Fig. 4

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 100481648

- EP 0771531 A2

### Non-patent literature cited in the description

- **HIROMI YOSHIDA et al.** *Journal of the Science of Food and Agriculture,* 01 August 1995, vol. 68, 407-415

- **GOW-CHIN YEN.** *Journal of the Science of Food and Agriculture,* 01 January 1990, vol. 50 (4), 563-570
- *Korea Food & Drug Administration Revision Notice,* May 2014